# EUROPEAN PATENT SPECIFICATION

(11) **EP 2 432 674 B1**
(45) Date of publication and mention of the grant of the patent: **13.03.2013**
(21) Application number: 10728292.3
(22) Date of filing: 20.05.2010
(51) Int. Cl.: B62B 5/06, B62D 7/02, B62B 3/00, F16M 11/42

(54) **INNOVATIVE TROLLEY AND ITS DRIVING SYSTEM**
INNOVATIVER WAGEN UND SEIN FAHRSYSTEM
CHARIOT INNOVANT ET SON SYSTEME D'ENTRAINEMENT

(30) Priority: 21.05.2009 IT PZ20090002
(43) Date of publication of application: 28.03.2012
(73) Proprietor: Eurocontainers SRL, 85020 Atella (IT)
(72) Inventor: D'AURIA, Giovanni, I-85027 Rapolla (IT); D'AURIA, Donato, I-85027 Rapolla (IT)
(74) Representative: Bruni, Giovanni
(86) International application number: PCT/IB2010/052236
(87) International publication number: WO 2010/134038

(56) References cited:
- DE-A1- 3 323 897
- GB-A- 374 726

## Description

Object of the present invention is a new trolley and its driving system, which allows more maneuverability in narrow spaces thus reducing the number of maneuvers to be performed by the operator without tilting.

At the known state of art, there exists a limited number of examples of trolleys with steering systems, which, however, do not face and solve the cited technical problems.

The trolleys known according to the state of art can be provided with corrected rotation, double rotation and ro-ro steering system.

The trolleys with corrected rotation and double rotation system rotate for example of maximum 30/40 grades from the stop position.

The trolleys with ro-ro steering system rotate of 360 grades from the stop position.

The trolleys with the cited steering systems need to be moved on great spaces; for example, in order to allow a correct positioning in the production line they need about 15 maneuvers by the operator with consequent considerable uneasiness in moving and tilting in narrow and constricted working areas.

In DE 3323897 A1 published on 3rd January 1985, even if the pushing handle rotates of 90 grades rightwards or leftwards, it does not allow an easy side push and dragging of the trolley, above all in case of full load trolley, because the fulcrum of the pushing forces is localized decentralized with respect to the center of gravity of the body of the trolley, thus the trolley cannot be moved uniformly when pushed laterally.

EP 1029765 A2 published on 23rd August 2000 solves the tilting technical problem of the carts for children transport, although the handle is connected to fixed wheels.

GB 374726 published on 16th June 1932, which represents the closet prior art, describes instead a system for rotating the axles provided with wheels, applied in turn, to general trolleys (usually in the railway field, however for heavy transport). In a general trolley provided with at least a couple of axles (two wheel for each axle), the system allows the partial rotation of the rear axle on a nearly horizontal plane; said rotation is controlled by the further rotation of the front axle around a central pin, similarly to a pivoting platform. The transmission of the rotation between the two axles can be provided by means of a toothed wheels transmission or by means of a belt or chain transmission, wound on pulleys under the forecarriage and rear axle of the trolley.

Also in this case, the driving rudder is connected only to fixed wheels, it being directly connected to an axle; moreover the provided steering system is very structured and complex with a plurality of mechanical elements interconnected between each other, thus causing drawbacks both for the easy moving of the trolley and the maintenance of the same mechanical organs.

FR 2319521 describes a trolley jointed to revolving wheels to be generally used in the transport field of materials, but, in particular, in the movie field for transporting the video-camera and the cameraman. The trolley comprises an U-shaped frame, an appendix of the frame functioning as control, a plurality of jointed arms, each one of which provided with a couple of wheels, and a series of mechanical connections (usually toothed wheels) between said arms and between them and the frame. Also in this case, the trolley object of the invention is very complex; anyway, the wheels are not applied directly to the trolley, but to arms in turn connected to the frame and, also, they are only couples of mobile wheels which can be moved independently with respect to each other according to the desired movement to be imposed to the trolley.

Aim of the present invention, is instead, an innovative trolley and its driving system, this being relatively easy from the structural point of view, which allows the operator to perform safe maneuvers in very narrow working areas in the least time possible and considerably reducing the human effort in the loading, discharging, translation, driving and stopping maneuvers of the trolley.

The present invention solves the technical problem of the difficult maneuverability of trolleys in narrow working areas, reducing the number of maneuvers in steering, stopping and/or tilting steps in loading and discharging conditions of the trolley or when it is positioned on inclined and sloping floors, thus reducing the risk of carrying away people and/or things guaranteeing the working area safety.

These and other advantages will be highlighted in the detailed description of the invention, specifically referring to the drawings 1/7 to 7/7, which by way of example show some not limiting, preferred embodiments.

In particular:
Fig. 1 is an axonometric view of the trolley as a whole;
Fig. 2 highlights the possible rotations of the towing bar;
Fig. 3 is an axonometric bottom view, highlighting the fifth wheels, the wheels, the steel wire, the pulley;
Fig. 4 is a side view of the trolley;
Fig. 5 shows the particular of the towing bar with respective coupling;
Fig. 6 shows the particular of the element for coupling two or more trolleys;
Fig. 7 shows a front view of the trolley with the pushing handle and respective controls highlighted. Referring to said figures, the object of the present invention is a trolley comprised of a towing bar 2, a pushing handle 3, two fifth wheels 10, two fixed wheels 4 and a revolving wheel 5 for each fifth wheel 10, a pulley 7, a steel wire 6, a brake, a loading and discharging plane, a cable for the brakes, two or more anti-tilting pins 11.

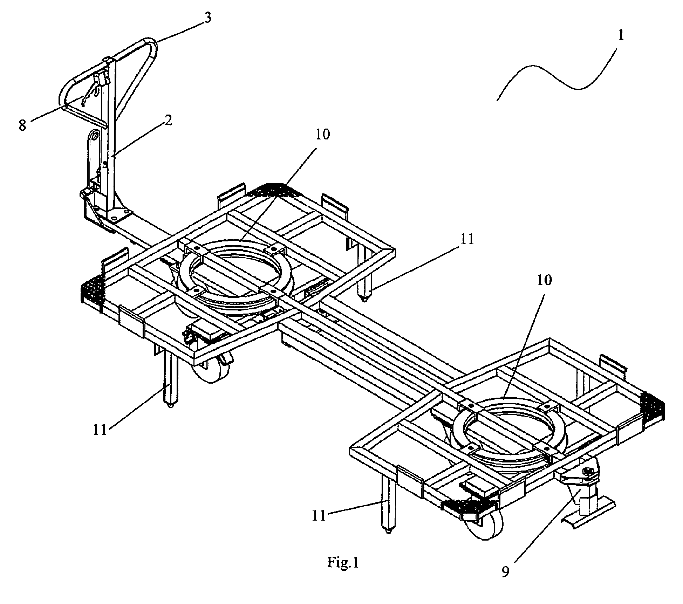

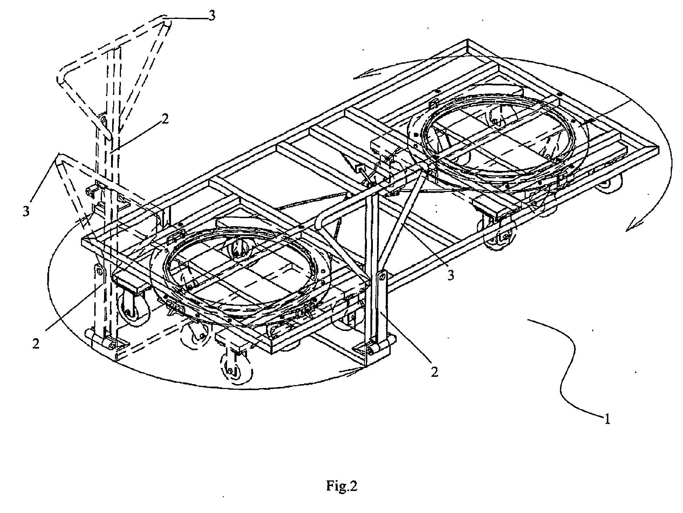

The trolley (fig. 1) is provided with an innovative driving system made up of two fifth wheels 10 connected and guided by a steel wire 6 fixed to the them by means of a wire terminal, while a central pulley 7 functions as a lever and guide for the wire 6. The fifth wheels 10 rotate of 180 grades rightwards and leftwards (fig. 2). On each fifth wheel 10, there are positioned two fixed wheels 4 and a revolving one 5 in order to prevent the trolley from being tilted during driving, in the rotation of the pushing maneuver of 180 grades from the side position of the same.

The fifth wheels 10 allow the operator to drive the trolley by means of the pushing handle 3 fixed to one of the two fifth wheels 10 from three different positions: a front one and two side ones, as shown in fig. 2.

The pushing handle performs an arch of 180 grades from one of the two side positions of the trolley. Therefore only one maneuver is needed in the translation and positioning steps of the trolley in narrow and constricted working areas. The trolley is steered without displacing it.

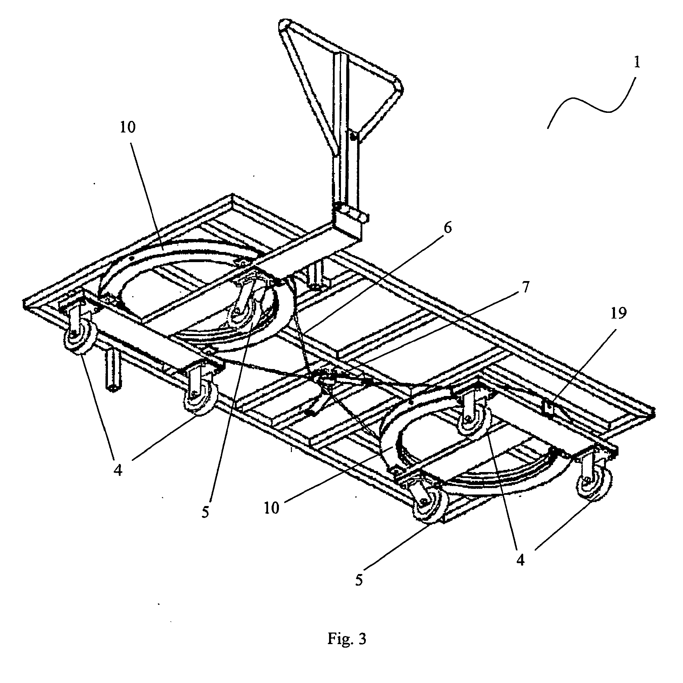

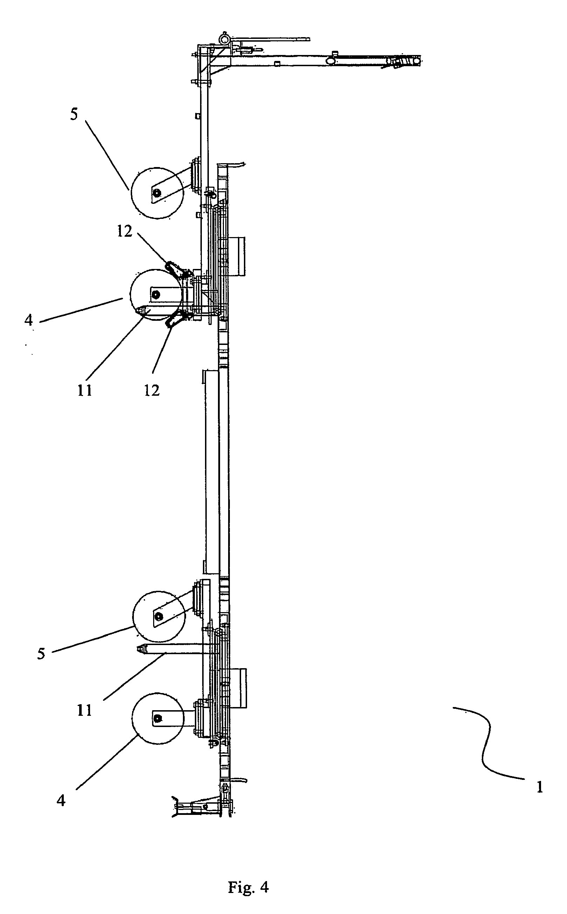

The trolley object of the present invention is provided with a towing bar 2 and a pushing handle 3 (figures 1 to 5).

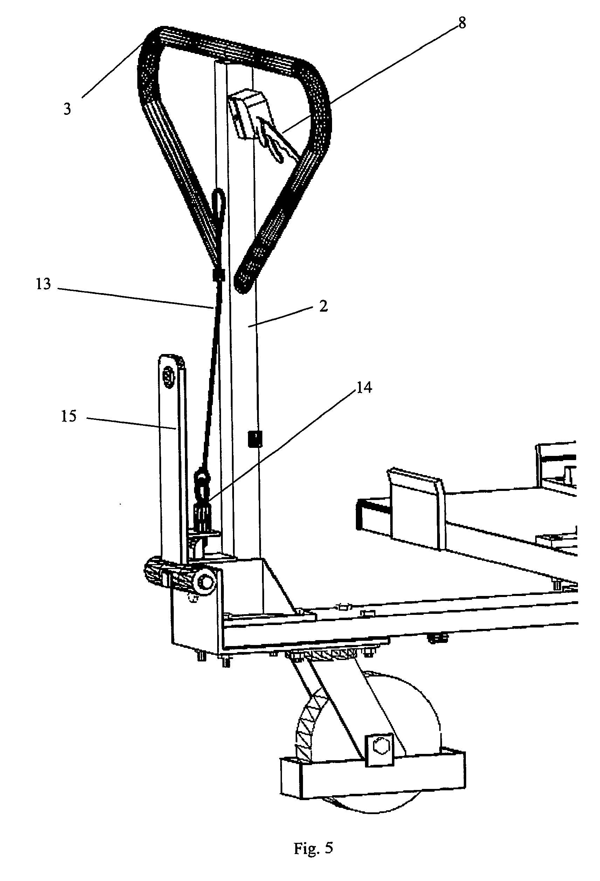

As shown in fig. 5, the towing bar 15 is released by means of a cord 13 fixed to a spring ratchet 14, functioning as stop for the rudder 2 when the same is the vertical position with respect to the ground. In fact, the spring ratchet 14, fixed to the rudder 15, contains inside itself a pin sliding inside a blocking element fixed to the pushing handle. When the trolley is in resting condition, by pulling the cord upwards, the rudder 15 rotates of 90 grades by falling, remaining in the open position to allow the trolleys or other motor towing means to be coupled. The towing bar 15 is provided with one shoulder.

By pulling the cord upwards, the pin goes back in the ratchet and the towing bar 15 rotates of 90 grades.

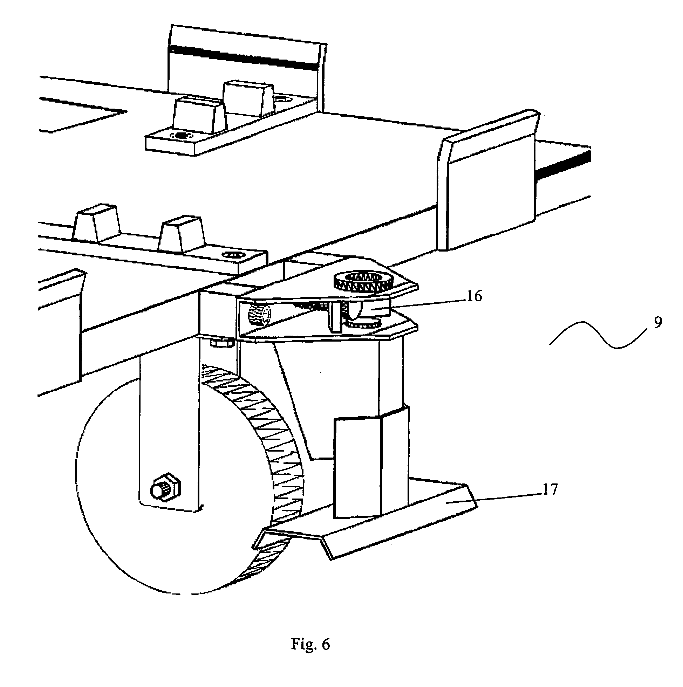

Fig. 6 shows the element for the coupling between trolleys or other towing means, which is performed by means of blocking element 9 of jaw type, arranged at the rear side of each trolley. The jaw element 9 is free of angles, thus allowing the operators to perform the coupling and to operate safely.

Inside the blocking element 9, in the lower portion, there is a fixed pin 16 (not shown) apt to be coupled with the towing bar. The jaw is opened by pressing an underlying pedal 17 and allows the the pin to be anchored to the shoulder of the towing bar 15.

The pushing handle is fixed to one of the two fifth wheels arranged under the loading and discharging plane, and at such a distance that the same rotates of 180 grades from the side positions of the trolley.

When the trolley moves, it is possible to slow it down or to stop it by means of a brake lever 8 arranged on the axis of the pushing rudder 2, just under the handle 3 of the rudder so that it is possible an easy gripping. By pulling the lever 8 upwards, it is tensioned the cable of the brake which closes the jaws 12 arranged on the wheels of the trolley. By pulling the brake lever 8 at its maximum, the stopping brake is actuated, while it is sufficient to pull upwards the releasing lever 18 arranged under the brake 8 to release it.

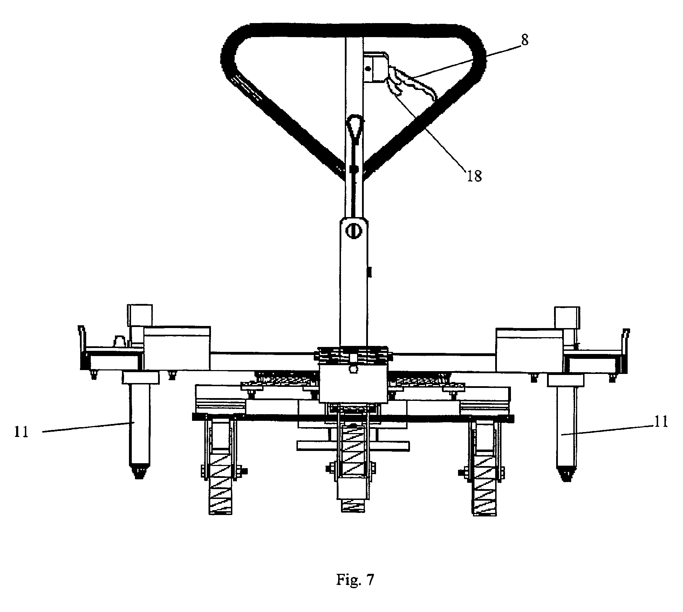

In the lower portion of the loading and discharging plane of the trolley, there is a plurality of elements 11, which prevent the trolley from being tilted on sloping plane and/or in steering maneuvers in case of full load condition, as it is shown in figs. 1, 4 and 7.

## Claims

1. Innovative trolley and its driving system comprising a goods loading and discharging plane, a towing bar, a pushing handle and a plurality of wheels; **characterized in that** said pushing handle (3) is anchored to a fifth wheel (10) arranged under the loading and discharging plane and in a position, on which two fixed wheels (4) and a 360 grades revolving one (5) are fixed.

2. Trolley according to claim 1, wherein said fifth wheels (10) are two in number and are connected and guided by a tensioning element (6) blocked by stopping means (19) and guided and tensioned by a central pulley (7).

3. Innovative trolley according to claim 1, **characterized in that** the pushing handle (3) can perform a rotation of 180 grades from the left side to the right one of the trolley; said pushing handle being provided with a brake (8) arranged on the longitudinal axis of the same.

4. Innovative trolley according to claim 2 and 3, **characterized in that** the brake lever (8) tensions a cable connected to the jaws (12) arranged on fixed wheels, said jaws remaining blocked by pulling the lever at maximum.

5. Innovative trolley according to claim 2 and 3, **characterized in that** the pushing handle is provided with a releasing lever (18) of the stopping brake.

6. Innovative trolley according to claim 1, **characterized in that** the towing bar (15) is provided with a shoulder and a pin sliding inside a cylinder (14) by means of a tensioning element (13).

7. Innovative trolley according to claim 1 and 5, **characterized in that** a pedal (17) opens a blocking element (9) free of angles, inside which a fixed pin (16) is housed in the shoulder of the tensioning rudder (15) of other trolley, the pressure of the pedal (17) allowing the pin to go out from the housing.

8. Innovative trolley according to the preceding claims, **characterized in that** under the plane of the trolley there are provided anti-tilting elements (11).

## Patentansprüche

1. Der innovative Wagen und sein Antriebssystem mit einer Güterlade- und ausladefläche, einer Abschleppstange, einem Schiebegriff und einer Vielzahl von Rädern ist **dadurch gekennzeichnet, dass** der oben genannte Schiebegriff (3) in einem fünften Rad (10) verankert ist, das sich unter der Lade- und Ausladefläche befindet und zwar an einer Stelle, wo zwei Festräder (4) und ein 360-Grad-Drehrad vorhanden sind.

2. Der Wagen nach Anspruch 1, wo die oben genannten fünften Räder (10) zwei an der Zahl sind und mit einem Spannelement (6) verbunden und geführt, mit Halteverrichtungen (19) blockiert, sowie mit einer Zentralscheibe (7) geführt und gespannt sind.

3. Der innovative Wagen nach Anspruch 1 ist **dadurch gekennzeichnet, dass** der Schiebegriff (3) eine 180-Grad-Rotation von der linken zur rechten Seite des Wagens durchführen kann und der oben genannte Griff mit einer Bremse (8) ausgestattet ist, die sich auf der Längsachse des oben genannten Griffs befindet.

4. Der innovative Wagen nach Anspruch 2 und 3 ist **dadurch gekennzeichnet, dass** der Bremshebel (8) ein Kabel spannt, das mit den Klemmbacken (12) verbunden ist, die sich auf Festrädern befinden; die oben genannten Klemmbacken bleiben blockiert, wenn der Hebel maximal gezogen wird.

5. Der innovative Wagen nach Anspruch 2 und 3 ist **dadurch gekennzeichnet, dass** der Schiebegriff mit einem Rückzugshebel (18) der Haltebremse ausgestattet ist.

6. Der Innovative Wagen nach Anspruch ist **dadurch gekennzeichnet, dass** die Abschleppstange (15) mit einer Schulter und einem Bolzen innerhalb eines Zylinders (14) durch ein Spannelement (13) ausgestattet ist.

7. Der innovative Wagen nach Anspruch 1 und 5 ist **dadurch gekennzeichnet, dass** ein Pedal (17) ein winkelfreies Sperrelement (9) öffnet, in dem ein Festbolzen (16) in der Schulter des Spannruders (15) eines anderen Wagens untergebracht ist, wobei der Druck des Pedals (17) den Bolzen aus dem Gehäuse ermöglicht.

8. Der innovative Wagen nach den vorhergehenden Ansprüchen ist **dadurch gekennzeichnet, dass** unterhalb der Wagenfläche Kippsicherungselemente (11) vorhanden sind.

## Revendications

1. Chariot novateur et son système d'entraînement comprenant un plan de chargement et de déchargement de marchandises, une barre de remorquage, une poignée de poussée et une pluralité de roues ; **caractérisé en ce que** ladite poignée de poussée (3) est fixée à une cinquième roue (10) disposée sous le plan de chargement et de déchargement et dans une position, sur laquelle deux roues fixes (4) et une roue tournant à 360 degrés (5) sont fixées.

2. Chariot selon la revendication 1, dans lequel lesdites cinquièmes roues (10) sont au nombre de deux et sont reliées et guidées par un élément tendeur (6) bloqué par un moyen d'arrêt (19) et guidé et tendu par une poulie centrale (7)

3. Chariot novateur selon la revendication 1, **caractérisé en ce que** la poignée de poussée (3) peut effectuer une rotation de 180 degrés du côté gauche au côté droit du chariot ; ladite poignée de poussée étant pourvue d'un frein (8) disposé sur l'axe longitudinal de celle-ci.

4. Chariot notateur selon la revendication 2 et 3, **caractérisé en ce que** le levier de frein (8) tend un câble relié aux mâchoires (12) disposées sur les roues fixes, lesdites mâchoires restant bloquées en tirant au maximum le levier.

5. Chariot novateur selon la revendication 2 et 3, **caractérisé en ce que** la poignée de poussée est pourvue d'un levier (18) de libération du frein d'arrêt.

6. Chariot novateur selon la revendication 1, **caractérisé en ce que** la barre de remorquage (15) est pourvu d'un épaulement et d'un épaulement qui coulisse à l'intérieur d'un cylindre (14) au moyen d'un élément tendeur (13).

7. Chariot novateur selon la revendication 1 et 5, **caractérisé en ce qu'**une pédale (17) ouvre un élément de blocage (9) dépourvu d'angles, à l'intérieur duquel se trouve une goupille fixe (16) dans l'épaulement du gouvernail de tension (15) d'un autre chariot, la pression de la pédale (17) permettant à la goupille de sortir du logement.

8. Chariot novateur selon la revendication précédente, **caractérisé en ce que** des éléments anti-basculement (11) sont ménagés sous le chariot.
